# EUROPÄISCHE PATENTSCHRIFT

(11) **EP 1 743 823 B1**
(45) Veröffentlichungstag und Bekanntmachung des Hinweises auf die Patenterteilung: **28.05.2008**
(21) Anmeldenummer: 06123361.5
(22) Anmeldetag: 23.03.2005
(51) Int. Cl.: B60W 30/08, B60T 7/08, B60K 17/10, F16H 61/46, B60W 10/10, B60W 10/18

(54) **Antriebssystem eines Arbeitsfahrzeugs**
Drive for a working vehicle
Entraînement pour véhicule de travail

(30) Priorität: 02.04.2004 DE 102004016242
(43) Veröffentlichungstag der Anmeldung: 17.01.2007
(62) Teilanmeldung aus: 05102335.6
(73) Patentinhaber: Deere & Company, Moline, IL 61265-8098 (US)
(72) Erfinder: Hofer, Jürgen, 66501, Großbundenbach (DE)
(74) Vertreter: Holst, Sönke

(56) Entgegenhaltungen:
- EP-A- 1 223 069
- EP-B- 0 706 466
- DE-A- 2 947 552
- DE-A- 19 607 048
- US-A- 4 301 901

## Beschreibung

Die Erfindung betrifft ein Antriebssystem eines Arbeitsfahrzeugs mit einem Hauptmotor, der mit einer Hydraulikpumpe in Antriebsverbindung steht, die ein mittels eines Aktors veränderbares Verdrängungsvolumen aufweist und mit einem Hydraulikmotor, der mit wenigstens einem im Eingriff mit dem Erdboden befindlichen Rad in Antriebsverbindung steht, wobei der Aktor mit einer Steuerungseinrichtung verbunden ist, die auch mit einem Sensor zur Erfassung der Position einer Geschwindigkeitsvorgabeeinrichtung, insbesondere eines Fahrhebels, verbunden ist, die Steuerungseinrichtung betreibbar ist, den Aktor entsprechend einer Geschwindigkeitsvorgabe der Geschwindigkeitsvorgabeeinrichtung einzustellen, und ein Rad mit einer Parkbremse in Antriebsverbindung steht, die durch einen Parkbremsenaktor betätigbar ist.

Bei vielen Arbeitsfahrzeugen, wie landwirtschaftlichen Fahrzeugen und Erntemaschinen, werden hydraulische Antriebe eingesetzt. Sie umfassen eine durch einen Verbrennungsmotor angetriebene Pumpe und einen mit der Pumpe hydraulikflüssigkeitsleitend verbundenen Hydraulikmotor, der ein Rad oder mehrere Räder antreibt. Bei manchen Fahrzeugen werden Räder der Vorder- und Hinterachse durch jeweils mindestens einen, den Achsen zugeordneten Hydraulikmotor angetrieben. Diese Hydraulikmotore sind oftmals mit verstellbarem Verdrängungsvolumen ausgestattet, wie auch die zugehörige Hydraulikpumpe.

Ein derartiges Fahrzeug ist in der EP 1 223 069 A offenbart. Ein Verbrennungsmotor treibt die verstellbare Hydraulikpumpe an, die hydraulikfluidleitend mit den verstellbaren Hydraulikmotoren verbunden ist, die jeweils zum Antrieb einer Achse dienen. Die Drehzahl der Motore und der Druck an ihrem Ein- und Auslass wird gemessen. Eine elektronische Steuereinheit ist mit einem Fahrhebel verbunden und steuert die Taumelscheiben der Hydraulikmotoren und der Hydraulikpumpe. Gemäß dieser Druckschrift werden die Schwenkwinkel der Hydraulikpumpe und der Hydraulikmotore entsprechend der Geschwindigkeitsvorgabe des Fahrhebels eingestellt. Falls die Drehzahlen der Achsen voneinander abweichen, was auf Schlupf hindeutet, wird jeweils der Hydraulikmotor, an dem Schlupf auftritt, verstellt. Der andere Hydraulikmotor und die Hydraulikpumpe werden zum Konstanthalten der Fahrgeschwindigkeit entsprechend geregelt. Zum Anhalten wird der Fahrhebel durch den Bediener in eine Ruheposition gebracht, so dass auch die Taumelscheiben in Ruhepositionen bewegt werden. Die Bremswirkung des Hydraulikmotors ist jedoch nicht in allen Fällen hinreichend.

Das der Erfindung zu Grunde liegende Problem wird darin gesehen, ein Antriebssystem eines Arbeitsfahrzeugs bereitzustellen, bei dem eine verbesserte Bremswirkung ermöglicht wird.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das Antriebssystem des Arbeitsfahrzeugs, bei dem es sich insbesondere um eine selbstfahrende Erntemaschine handeln kann, umfasst einen Hauptmotor, der in der Regel ein Verbrennungsmotor ist. Der Hauptmotor treibt eine Hydraulikpumpe direkt oder indirekt, d.h. über dazwischen geschaltete mechanische, hydraulische oder beliebige andere Getriebe an. Die Hydraulikpumpe steht über eine Hydraulikleitung mit einem Hydraulikmotor in Verbindung, der mindestens ein im Eingriff mit dem Erdboden befindliches Rad - oder eine Gleiskette - mechanisch antreibt. Eine Steuerungseinrichtung ist mit einem Sensor verbunden, der die Position einer Geschwindigkeitseingabeeinrichtung erfasst, z. B. eines Fahrhebels oder eines Gaspedals. Die Steuerungseinrichtung ist außerdem mit einem Aktor verbunden, der das Verdrängungsvolumen der Hydraulikpumpe verstellt.

Es wird vorgeschlagen, die Steuerungseinrichtung des Antriebssystems des Arbeitsfahrzeugs mit einem Parkbremsenaktor zu verbinden. Falls die Geschwindigkeitsvorgabeeinrichtung relativ schnell, d. h. mit einer einen festgelegten Schwellenwert überschreitenden Geschwindigkeit, in Richtung auf die Neutralstellung bewegt wird, dient die Parkbremse als zusätzliche Bremse, um die Bremswirkung des Hydraulikmotors oder der Hydraulikmotore zu verstärken. Im Falle einer Notbremsung wird somit ein schnelleres Anhalten der Arbeitsmaschine möglich. Die Ansteuerung des Parkbremsaktors kann über ein Proportionalventil erfolgen, um auch Zwischenwerte der Verzögerung zu ermöglichen.

In den Zeichnungen ist ein nachfolgend näher beschriebenes Ausführungsbeispiel der Erfindung dargestellt. Es zeigt:
- Fig. 1: ein Schema eines erfindungsgemäßen Antriebssystems,
- Fig. 2: ein Flussdiagramm, gemäß dem die Steuerungseinrichtung bei Auftreten von Schlupf vorgeht, und
- Fig. 3: ein Flussdiagramm, gemäß dem die Steuerungseinrichtung bei Auftreten einer Bremswirkung der hinteren Räder vorgeht.

### Aufbau des Antriebssystems

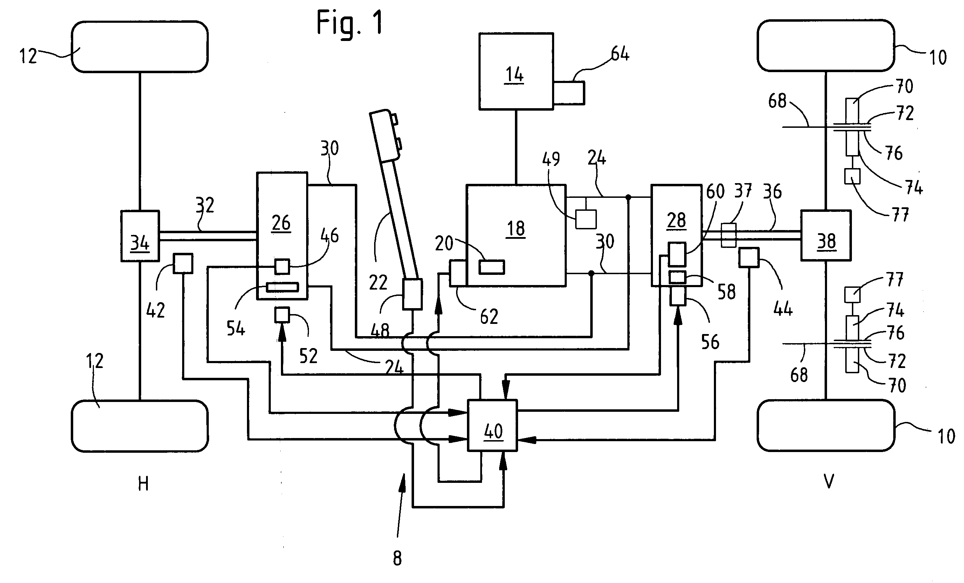

In der Figur 1 ist eine Ausführungsform eines erfindungsgemäßen Antriebssystems schematisch dargestellt. Ein Arbeitsfahrzeug 8 weist einen (nicht dargestellten) Rahmen oder ein selbsttragendes Chassis auf, der sich auf vorderen Rädern 10 und hinteren Rädern 12 abstützt, die sich im Eingriff mit dem Erdboden befinden. Die hinteren Räder 12 sind in der Regel lenkbar, während die vorderen Räder 10 größeren Durchmessers als die hinteren Räder 10 sind und den größeren Teil des Gewichts des Arbeitsfahrzeugs 8 abstützen, insbesondere wenn es sich um eine Erntemaschine in Form eines Mähdreschers, Baumwollpflückers oder selbstfahrenden Feldhäckslers handelt. Die vorderen Räder 10 sind somit traktionsunkritischer als die hinteren Räder 12. Bei anderen Ausführungsformen von Arbeitsmaschinen, beispielsweise Traktoren oder Zuckerrohrerntern mit lenkbaren vorderen Rädern, könnten die Positionen der hinteren und vorderen Räder 12, 10 vertauscht sein.

Das Antriebssystem umfasst einen Hauptmotor 14 in Form eines Verbrennungsmotors (Dieselmotor). Über eine Welle 16 treibt der Hauptmotor 14 eine Hydraulikpumpe 18 an, deren Fluidverdrängung durch eine Taumelplatte 20 veränderbar ist. Deren Position ist durch einen Fahrhebel 22 veränderbar, welcher sich in einer Fahrerkabine des Arbeitsfahrzeugs 8 befindet. Die Hydraulikpumpe 18 weist einen Auslass auf, der durch Leitungen 24 mit dem Einlass eines ersten Hydraulikmotors 26 und dem Einlass eines zweiten Hydraulikmotors 28 verbunden ist. Ein Einlass der Hydraulikpumpe 18 ist über Leitungen 30 mit dem Auslass des ersten Hydraulikmotors 26 und dem Auslass des zweiten Hydraulikmotors 28 verbunden. Der Hauptmotor 14 treibt, falls das Arbeitsfahrzeug 8 eine selbstfahrende Erntemaschine ist, auch deren Gutbearbeitungs- bzw. Fördereinrichtungen an.

Der erste Hydraulikmotor 26 treibt über eine erste Antriebswelle 32 und ein erstes selbstsperrendes Differenzialgetriebe 34 die beiden hinteren Räder 12 an. Der zweite Hydraulikmotor 28 treibt über eine zweite Antriebswelle 36 und ein zweites selbstsperrendes Differenzialgetriebe 38 die beiden vorderen Räder 10 an. Der erste Hydraulikmotor 26 kann wahlweise ein- und ausschaltbar sein, so dass ein Vierradantrieb nur in besonderen Betriebssituationen auswählbar ist, in denen ein besseres Traktionsvermögen benötigt wird.

Zwischen dem zweiten Hydraulikmotor 28 und dem zweiten Differenzialgetriebe 38 ist ein Schaltgetriebe 37 mit unterschiedlichen, wählbaren Übersetzungsstufen vorhanden. Die Übersetzungsstufe des Schaltgetriebes 37 kann - vorzugsweise auch während der Fahrt - manuell auf mechanische oder elektromechanische bzw. elektrohydraulische Weise geändert werden.

Alternativ findet eine selbsttätige Umschaltung der Übersetzungsstufe des Getriebes statt, wie sie in der DE 102 60 480 A beschrieben wird, deren Offenbarung durch Verweis mit in den vorliegenden Unterlagen aufgenommen wird.

Zum Rückwärtsfahren werden durch eine entsprechende Einstellung der Taumelplatte 20 der Hydraulikpumpe 18 die Flussrichtungen in den Leitungen 24 und 30 umgekehrt.

### Steuerungseinrichtung

Eine Steuerungseinrichtung 40 ist mit einem ersten Drehzahlsensor 42, einem zweiten Drehzahlsensor 44 und einem ersten Drucksensor 46 verbunden. Der erste Drehzahlsensor 42 ist der ersten Antriebswelle 32 benachbart angeordnet und gibt bei jeder Umdrehung (oder mehrmals während einer Umdrehung) der ersten Antriebswelle 32 einen Impuls ab. Der zweite Drehzahlsensor 44 ist an der zweiten Antriebswelle 36 ausgangsseitig des Schaltgetriebes 37 angebracht und gibt bei jeder Umdrehung (oder mehrmals während einer Umdrehung) der zweiten Antriebswelle 36 einen Impuls ab. Der Drucksensor 46 ist im Innenraum des ersten Hydraulikmotors 26 angeordnet und erfasst den Druck, der am Auslass des ersten Hydraulikmotors 26 anliegt.

Die Steuerungseinrichtung 40 ist weiterhin mit einem elektromechanischen Aktor 52 verbunden, der zur Verstellung einer Taumelplatte 54 des ersten Hydraulikmotors 26 eingerichtet ist. Eine Information über die Stellung des Aktors 52 kann an die Steuerungseinrichtung 40 zurückgekoppelt werden. Findet ein Schrittmotor als Aktor 52 Verwendung, erübrigt sich diese Rückkopplung.

Auch der zweite Hydraulikmotor 28 weist eine durch einen elektromechanischen Aktor 56 und eine verstellbare Taumelplatte 58 veränderbare Fluidverdrängung auf. Eine Information über die Stellung des Aktors 56 kann an die Steuerungseinrichtung 40 zurückgekoppelt werden. Dem zweiten Hydraulikmotor 28 ist ein zweiter Drucksensor 60 zugeordnet, der den Druck am Auslass des zweiten Hydraulikmotors 28 misst. Die Steuerungseinrichtung 40 ist mit dem Drucksensor 60 und dem Aktor 56 verbunden.

Weiterhin ist ein dritter Aktor 62 zur Verstellung der Position der Taumelplatte 20 der Hydraulikpumpe 18 vorgesehen, der elektromechanisch oder elektrohydraulisch arbeitet und durch die Steuerungseinrichtung 40 gesteuert wird. Es ist denkbar, der Steuerungseinrichtung 40 zusätzlich eine Information über die jeweilige Stellung des dritten Aktors 62 zuzuführen.

Ein als Geschwindigkeitsvorgabeeinrichtung dienender Fahrhebelstellungssensor 48 ist dem Fahrhebel 22 zugeordnet. Der Fahrhebelstellungssensor 48 erfasst die aktuelle Stellung des Fahrhebels 22 optisch oder magnetisch und übermittelt sie an die Steuerungseinrichtung 40.

Die Steuerungseinrichtung 40 steuert die Aktoren 52, 56 und 62 in Normalbetrieb derart in an sich bekannter Weise an, dass sich das Arbeitsfahrzeug 8 mit einer Geschwindigkeit bewegt, die der Vorgabe durch den Fahrhebel 22 entspricht. Dabei kann das Verdrängungsvolumen der Taumelplatte 20 der Hydraulikpumpe 18 beispielsweise bis zu einer bestimmten Grenzgeschwindigkeit proportional zur Vorgabe der Vortriebsgeschwindigkeit eingestellt werden, während die Verdrängungsvolumina der Taumelplatten 54, 58 der Hydraulikmotore 26, 28 bei Geschwindigkeiten unter der Grenzgeschwindigkeit auf ihren Maximalwert gestellt werden und, sobald das Verdrängungsvolumen der Taumelplatte 20 der Hydraulikpumpe 18 bei der Grenzgeschwindigkeit sein Maximum erreicht hat, bei dem das Verdrängungsvolumen der Taumelplatte 20 der Hydraulikpumpe 18 bei höheren Geschwindigkeiten auch bleibt, in einem Maße reduziert werden, das zur Erreichung der gewünschten Geschwindigkeit führt. Der Wert der Grenzgeschwindigkeit hängt von der jeweils gewählten Übersetzungsstufe des Getriebes 37 ab.

Die Steuerungseinrichtung 40 erhält vom zweiten Drehzahlsensor 44 einen Messwert hinsichtlich der Drehzahl der vorderen Räder 10. Außerdem erhält die Steuerungseinrichtung 40 vom ersten Drehzahlsensor 42 eine Information über die Drehzahl der hinteren Räder 12. Weiterhin liegen der Steuerungseinrichtung 40 Informationen hinsichtlich der Übersetzungsverhältnisse zwischen den Wellen 32, 36, mit denen die Drehzahlsensoren 42, 44 zusammenwirken, und den Rädern 10, 12 sowie hinsichtlich der äußeren Durchmesser der Räder 10, 12 vor.

### Vorgehen bei Schlupf

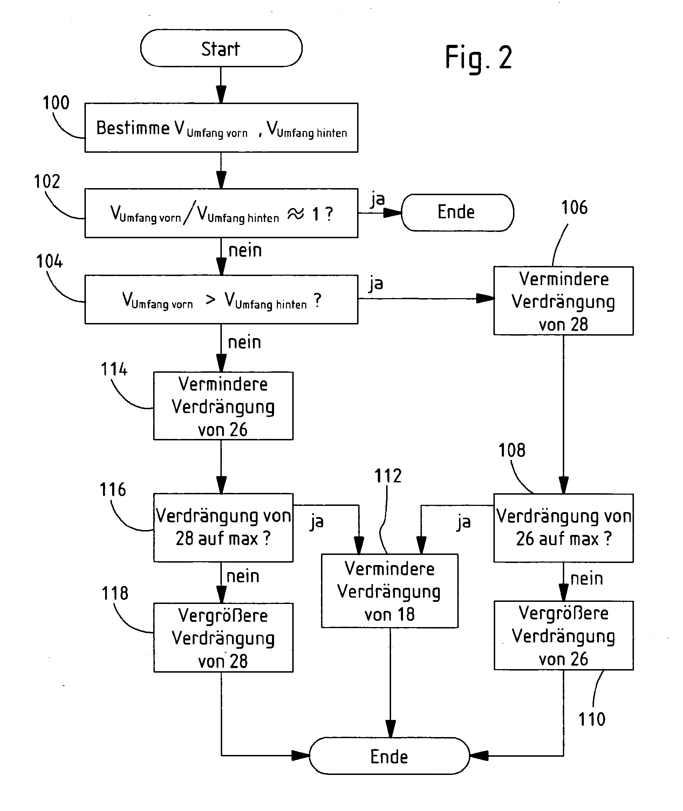

Um auch bei Betriebssituationen, in denen Schlupf an den Rädern auftritt, ein Durchdrehen der Räder 10, 12 zu verhindern, führt die Steuerungseinrichtung 40 regelmäßig eine Routine durch, wie sie in der Figur 2 dargestellt ist.

Die Steuereinrichtung 40 berechnet (Schritt 100 in Figur 2) ein Verhältnis der Umfangsgeschwindigkeit der vorderen Räder 10 zur Umfangsgeschwindigkeit der hinteren Räder 12. Ist das Verhältnis gleich 1 oder weicht davon nur unwesentlich ab (Schritt 102), sind keine weiteren Maßnahmen erforderlich.

Falls das Verhältnis der Umfangsgeschwindigkeit der vorderen Räder 10 zur Umfangsgeschwindigkeit der hinteren Räder 12 größer als 1 ist (Schritt 104), kann davon ausgegangen werden, dass die vorderen Räder 10 durchdrehen. Die Steuerungseinrichtung 40 veranlasst dann den Aktor 56 (Schritt 106), die Taumelplatte 58 in eine Stellung zu verbringen, in der die Geschwindigkeit des zweiten Hydraulikmotors 28 vermindert wird, d.h. sein Verdrängungsvolumen wird vermindert. Um in diesem Fall die Geschwindigkeit der hinteren Räder 12 konstant zu halten, prüft die Steuereinrichtung 40 zunächst ab (Schritt 108), ob das Verdrängungsvolumen des ersten Hydraulikmotors 26 schon auf dem Maximalwert ist. Falls das nicht der Fall ist, wird der Aktor 52 (Schritt 110) derart angesteuert, dass er das Verdrängungsvolumen des ersten Hydraulikmotors 26 vergrößert. Letzterer dreht sich somit langsamer und nimmt den zusätzlichen Hydraulikfluss auf, der durch die Verstellung der Taumelplatte 58 nicht mehr durch den zweiten Hydraulikmotor 28 aufgenommen werden kann. Ist die Taumelplatte 54 des ersten Hydraulikmotors 26 hingegen schon auf maximales Verdrängungsvolumen gestellt oder kann sie nicht in dem Maß verstellt werden, das erforderlich wäre, um das freiwerdende, zusätzliche Volumen aufzunehmen, veranlasst die Steuerungseinrichtung 40 den Aktor 62 (Schritt 112), die Taumelplatte 20 der Hydraulikpumpe 18 in eine Stellung zu bringen, in der sie einen in dem Maße verminderten Hydraulikfluss bereitstellt, in dem das Verdrängungsvermögen des zweiten Hydraulikmotors 28 vermindert wird. Die Taumelplatte 54 des ersten Hydraulikmotors 26 ist oder wird auf maximales Verdrängungsvolumen gestellt.

Ist das Verhältnis der Umfangsgeschwindigkeit der vorderen Räder 10 zur Umfangsgeschwindigkeit der hinteren Räder 12 hingegen im Schritt 104 kleiner als 1, kann davon ausgegangen werden, dass die hinteren Räder durchdrehen. Die Steuerungseinrichtung 40 veranlasst dann den Aktor 52 (Schritt 114), die Taumelplatte 54 in eine Stellung zu verbringen, in der die Geschwindigkeit des ersten Hydraulikmotors 26 vermindert wird. Um in diesem Fall die Geschwindigkeit der vorderen Räder 10 konstant zu halten, prüft die Steuereinrichtung 40 zunächst (Schritt 116) ab, ob das Verdrängungsvolumen des zweiten Hydraulikmotors 28 schon auf dem Maximalwert ist. Falls das nicht der Fall ist, wird der Aktor 56 (Schritt 118) derart angesteuert, dass er das Verdrängungsvolumen des zweiten Hydraulikmotors 28 vergrößert. Letzterer dreht sich somit langsamer und nimmt den zusätzlichen Hydraulikfluss auf, der durch die Verstellung der Taumelplatte 54 nicht mehr durch den ersten Hydraulikmotor 26 aufgenommen werden kann. Ist die Taumelplatte 58 des zweiten Hydraulikmotors 28 hingegen schon auf maximales Verdrängungsvolumen gestellt oder kann sie nicht in dem Maß verstellt werden, das erforderlich wäre, um das freiwerdende, zusätzliche Volumen aufzunehmen, veranlasst die Steuerungseinrichtung 40 den Aktor 62 (Schritt 112), die Taumelplatte 20 der Hydraulikpumpe 18 in eine Stellung zu bringen, in der sie einen in dem Maße verminderten Hydraulikfluss bereitstellt, in dem das Verdrängungsvermögen des ersten Hydraulikmotors 26 vermindert wird. Die Taumelplatte 58 des zweiten Hydraulikmotors 26 ist oder wird auf maximales Verdrängungsvolumen gestellt.

Diese Regelstrategie bedeutet physikalisch, dass man davon ausgeht, dass eine Situation vorliegt, in der die Räder einer Achse verminderten Bodenkontakt haben, während die Räder der anderen Achse noch hinreichenden Kontakt haben, um das verfügbare Drehmoment auf den Boden zu übertragen.

### Vorgehen bei dynamischer Bremssituation

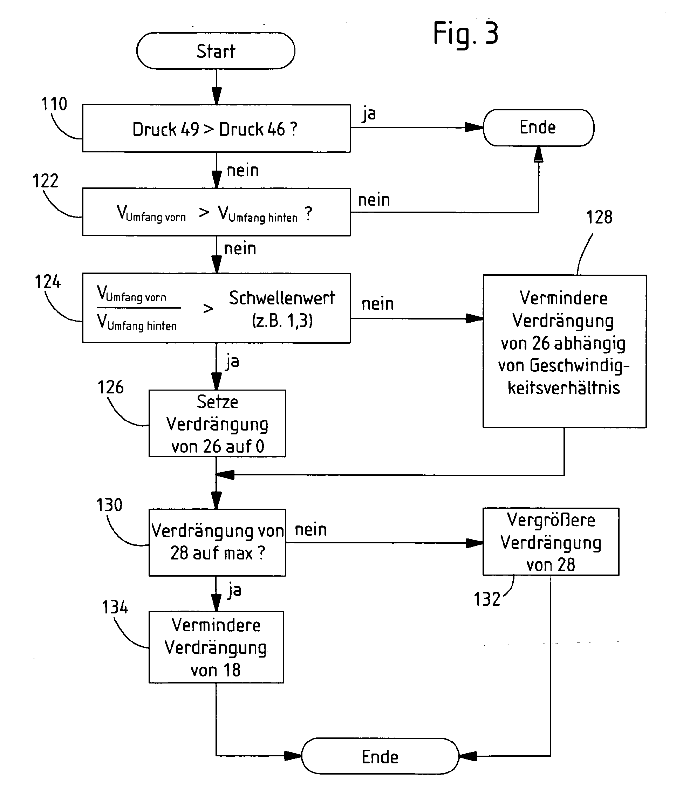

Der Betriebszustand der hinteren Räder 12 wird anhand einer Routine überwacht und gesteuert, wie sie in der Figur 3 dargestellt ist. Dabei erfasst die Steuerungseinrichtung 40 den am Einlass des ersten Hydraulikmotors 26 herrschenden Druck mittels eines weiteren Drucksensors 49. Dieser Messwert wird mit dem Druck am Auslass des Hydraulikmotors 26 verglichen (Schritt 120 in Figur 3), welcher durch den Drucksensor 46 gemessen wird. Der Vergleich erlaubt eine Bestimmung des Betriebszustands des ersten Hydraulikmotors 26. Wenn der Druck am Einlass größer als am Auslass ist, setzt der erste Hydraulikmotor 26 Leistung um und treibt das Arbeitsfahrzeug 8 voran; die Routine in Figur 3 endet dem gemäß. Ist der Druck am Einlass kleiner als am Auslass, befinden sich die hinteren Räder 10 in einer dynamischen Bremssituation, z. B. beim Bergabfahren. Um ein Durchdrehen der hinteren Räder 10 oder einen Backspin-Effekt zu vermeiden, veranlasst die Steuerungseinrichtung 40, falls sich die vorderen Räder 10 zusätzlich schneller als die hinteren Räder 12 drehen (Schritt 122), dass der Aktor 52 die Taumelplatte 54 in Richtung kleinerer Geschwindigkeit verstellt (Schritt 128). Das Maß der Verstellung hängt von der Geschwindigkeitsdifferenz ab. Falls diese einen Schwellenwert von beispielsweise 30 % überschreitet (Schritt 124), wird der Hydraulikmotor 26 ganz abgeschaltet (Schritt 126). Bei sehr kleinen Geschwindigkeiten erübrigt sich dieses Vorgehen.

Die Verstellung der Taumelplatte 54 wird wiederum durch eine Verstellung der Taumelplatte 58 ausgeglichen (Schritt 132), um die Fahrgeschwindigkeit des Arbeitsfahrzeugs 8 konstant zu halten. Falls diese sich bereits bei maximalem Verdrängungsvolumen befindet (Schritt 130), ist analog zu der in Figur 2 dargestellten Vorgehensweise das Verdrängungsvolumen der Hydraulikpumpe 18 zu vermindern (Schritt 134). Anzumerken ist, dass eine entsprechende Überwachung der vorderen Räder 10 anhand des Drucksensors 60 ebenfalls möglich wäre.

Die dargestellten Routinen werden regelmäßig durchgeführt, z. B. im Abstand einiger Millisekunden, und die erläuterten Verstellungen werden rückgängig gemacht, wenn kein Schlupf und keine unerwünschte Bremswirkung der Räder 10 oder 12 mehr vorliegt.

### Geschwindigkeitsvorgabe und Bremssystem

Um das Arbeitsfahrzeug im Gefahrenfall zügig anhalten zu können, ist eine Betriebsbremse vorgesehen, die sich jeweils aus einer drehfest mit der Achse der vorderen Räder 10 verbundenen Bremsscheibe 68 und einer Bremsbacke 72 zusammensetzt, die durch einen Bremszylinder 70 gegen die Bremsscheibe 68 gedrückt werden kann. Jedem Vorderrad 10 und auch jedem Hinterrad 12 kann eine eigene Betriebsbremse zugeordnet sein. Der Bremszylinder 70 wird hydraulisch über ein in der Fahrerkabine angeordnetes Pedal betätigt, in der Regel über einen Bremskraftverstärker. Die Betriebsbremse ist auch im Straßenfahrbetrieb wirksam, in dem die Fahrgeschwindigkeit durch den Fahrhebel 22 oder ein Gaspedal vorgebbar ist.

Zur Arretierung des Arbeitsfahrzeugs 8 im Stillstand ist weiterhin eine Parkbremse vorgesehen, die einen als Parkbremsenaktor zur Betätigung der Parkbremse dienenden Bremszylinder 74 umfasst, der betreibbar ist, eine Bremsbacke 76 gegen die Bremsscheibe 68 zu drücken. Die Bremsbacke 76 und der Bremszylinder 74 befinden sich auf der Seite der Bremsscheibe 68, die dem Bremszylinder 70 und der Bremsbacke 72 gegenüber liegt. Jedem Vorderrad 10 und auch jedem Hinterrad 12 kann eine eigene Parkbremse zugeordnet sein. Der Bremszylinder 74 ist mit der Steuerungseinrichtung 40 verbunden und wird durch sie angesteuert. Die Parkbremse wird durch den Bediener manuell mittels eines geeigneten, mit der Steuerungseinrichtung 40 verbundenen Schalters oder durch die Steuerungseinrichtung 40 selbsttätig bei Stillstand des Arbeitsfahrzeugs 8 aktiviert, um ein unerwünschtes Wegrollen zu verhindern.

Die Geschwindigkeit des Arbeitsfahrzeugs 8 wird, wie bereits erwähnt, beim Erntebetrieb mit dem Fahrhebel 22 kontrolliert, während sie beim Straßenfahrbetrieb ebenfalls durch den Fahrhebel 22 oder ein Gaspedal vorgegeben wird. Im Straßenfahrbetrieb, der durch einen Ernte/Straßenfahrbetriebsschalter auswählbar ist oder anhand des Betriebszustands von Arbeitselementen des Arbeitsfahrzeugs 8 selbsttätig erkannt werden kann, veranlasst die Steuerungseinrichtung 40 eine Motorsteuerung 64 des Hauptmotors 14, die Drehzahl des Hauptmotors 14 zu vermindern, um den Betriebsstoffverbrauch zu reduzieren.

Die Steuerung der Geschwindigkeit des Arbeitsfahrzeugs 8 erfolgt zumindest beim Erntebetrieb, ggf. auch im Straßenfahrbetrieb, ausschließlich durch den Fahrhebel 22. Falls im Straßenfahrbetrieb ein Gaspedal zur Geschwindigkeitsvorgabe verwendet wird, ist ihm ebenfalls ein mit der Steuerungseinrichtung 40 verbundener Sensor zur Erfassung seiner Position zugeordnet, entsprechend dem Fahrhebelstellungssensor 48, so dass das Gaspedal den Fahrhebel 22 ersetzt, während die übrigen Antriebselemente wie im Erntebetrieb durch die Steuerungseinrichtung 40 kontrolliert werden.

Eine gewünschte Verzögerung des Arbeitsfahrzeugs 8 erfolgt, falls der Fahrhebel 22 bzw. das Gaspedal in Richtung auf seine Neutralstellung bewegt wird, durch die Bremswirkung der Hydraulikmotoren 26, 28. Diese Bremswirkung ist durch Parameter der Hydraulikmotoren 26, 28 begrenzt. Falls der Fahrhebel 22 oder das Gaspedal relativ schnell in seine Neutralstellung bewegt wird, um das Arbeitsfahrzeug 8 beispielsweise im Notfall relativ schnell abstoppen zu können, wird eine vergrößerte Bremswirkung erzielt, indem die Steuerung 40 den bzw. die Bremszylinder 74 der Parkbremse aktiviert. Dadurch lässt sich das Arbeitsfahrzeug 8 relativ schnell anhalten. Eine Aktivierung des oder der Bremszylinder 74 der Parkbremse erfolgt somit, wenn die Zeitableitung des Positionssignals des Fahrhebelstellungssensors 48 (bzw. eines entsprechenden Sensors zur Erfassung der Position des Gaspedals) über einem bestimmten Schwellenwert liegt. Vorzugsweise wird der Bremszylinder 74 über ein Proportionalventil 77 angesteuert, so dass auch Zwischenwerte der Bremswirkung erzielbar sind.

## Patentansprüche

1. Antriebssystem eines Arbeitsfahrzeugs (8) mit einem Hauptmotor (14), der mit einer Hydraulikpumpe (18) in Antriebsverbindung steht, die ein mittels eines Aktors (62) veränderbares Verdrängungsvolumen aufweist und mit einem Hydraulikmotor (26, 28), der mit wenigstens einem im Eingriff mit dem Erdboden befindlichen Rad (10, 12) in Antriebsverbindung steht, wobei der Aktor (62) mit einer Steuerungseinrichtung (40) verbunden ist, die auch mit einem Sensor (48) zur Erfassung der Position einer Geschwindigkeitsvorgabeeinrichtung, insbesondere eines Fahrhebels (22), verbunden ist, die Steuerungseinrichtung (40) betreibbar ist, den Aktor (62) entsprechend einer Geschwindigkeitsvorgabe der Geschwindigkeitsvorgabeeinrichtung einzustellen, und ein Rad (10) mit einer Parkbremse in Antriebsverbindung steht, die durch einen Parkbremsenaktor betätigbar ist, **dadurch gekennzeichnet, dass** die Steuerungseinrichtung (40) mit dem Parkbremsenaktor verbunden und betreibbar ist, die Parkbremse zu aktivieren, falls die Geschwindigkeitsvorgabeeinrichtung mit einer Geschwindigkeit in Richtung auf ihre Neutralstellung bewegt wird, die über einem Schwellenwert liegt.

2. Antriebssystem nach Anspruch 1, **dadurch gekennzeichnet, dass** der Parkbremsenaktor über ein Proportionalventil (77) angesteuert wird.

3. Erntemaschine, insbesondere Mähdrescher, Baumwollpflücker oder Feldhäcksler, mit einem Antriebssystem nach einem der vorhergehenden Ansprüche.

## Claims

1. Drive system of a work vehicle (8), comprising a main motor (14), which is drive-connected to a hydraulic pump (18) having a displacement volume which is variable by means of an actuator (62), and comprising a hydraulic motor (26, 28), which is drive-connected to at least one wheel (10, 12) in engagement with the ground, wherein the actuator (62) is connected to a control mechanism (40), which is also connected to a sensor (48) for detecting the position of a speed presetting device, in particular a throttle lever (22), the control mechanism (40) can be operated to set the actuator (62) in accordance with a speed preset of the speed presetting device, and a wheel (10) is drive-connected to a parking brake, which can be operated by a parking brake actuator, **characterized in that** the control mechanism (40) is connected to the parking brake actuator and can be operated to activate the parking brake if the speed presetting device is moved in the direction of its neutral setting at a speed exceeding a threshold value.

2. Drive system according to Claim 1, **characterized in that** the parking brake actuator can be controlled by means of a proportional valve (77).

3. Harvesting machine, in particular a combine harvester, cotton picker or forage harvester, comprising a drive system according to one of the preceding claims.

## Revendications

1. Système d'entraînement pour un véhicule de travail (8), comportant un moteur principal (14) qui est relié en entraînement à une pompe hydraulique (18) à cylindrée variable par l'intermédiaire d'un actionneur (62), et comportant un moteur hydraulique (26, 28) qui est relié en entraînement à au moins une roue (10, 12) en prise avec le sol, l'actionneur (62) étant relié à un dispositif de commande (40), qui est également relié à un capteur (48) destiné à détecter la position d'un dispositif de définition de la vitesse, en particulier un levier de commande (22), le dispositif de commande (40) pouvant être utilisé pour régler l'actionneur (62) en fonction d'une définition de la vitesse par le dispositif de définition de la vitesse et une roue (10) étant reliée en entraînement à un frein de stationnement, qui peut être actionné par un actionneur de frein de stationnement, **caractérisé en ce que** le dispositif de commande (40) est relié à l'actionneur du frein de stationnement et peut être utilisé pour activer le frein de stationnement lorsque le dispositif de définition de la vitesse est amené dans sa position neutre avec une vitesse supérieure à une valeur seuil.

2. Système d'entraînement selon la revendication 1, **caractérisé en ce que** l'actionneur du frein de stationnement est activé par l'intermédiaire d'une vanne proportionnelle (77).

3. Machine de récolte, en particulier moissonneuse-batteuse, cueilleur de coton ou ensileuse, comportant un système d'entraînement selon l'une des revendications précédentes.
